# EUROPEAN PATENT APPLICATION

(11) **EP 4 641 352 A1**
(43) Date of publication of application: **29.10.2025**
(21) Application number: 24000047.1
(22) Date of filing: 23.04.2024
(51) Int. Cl.: G06F 3/00, G06Q 10/06, G06Q 10/0631, G06Q 10/10

(54) **REMOTE COUNTER SYSTEM WITH ADVANCED FUNCTIONS**

(71) Applicant: Secretel Service S.r.l., 20054 Segrate (MI) (IT)
(72) Inventor: IANNELLI, Franco, 86170 Isernia (IT)
(74) Representative: Maiello, Helenio Francesco

(57) **Abstract**

A remote counter system comprises one or more local counter **(2)** accessible locally by a plurality of users **(U),** one or more remote workstations **(3)** suitable to be placed in remote communication with one at a time of said local counters **(2),** video presence communication means **(4)** associated with each of said local counters **(2)** and suitable to remotely put said workstations **(3)** in contact with said local counters **(2),** a central management unit **(5)** remotely connected to each of said local counters **(2)** and suitable to receive requests from users **(D)** via said local counters **(2)** for providing a service and temporarily associating said remote workstations **(3)** with said local counters **(2)** according to a predetermined supply order based on one or more parameters.

## Description

### Technical Field

The present invention finds application in the information and communication technology field and in particular in the field of systems and methods specially adapted for administrative, commercial, financial and management purposes and particularly has as its object a remote counter system with advanced functions for the remote management of counter services.

### State of the art

As known, the management of counter services for users, both in the private sector and in public administrations, i.e. all those services which allow the exchange of documents and/or information between a public citizen and a public body or private entity through the interposition of an operator, it is an operation that is still mainly carried out in a traditional way.

In particular, it is normally expected that the user of the service goes to a specially designated room where he/she will find one or more operators authorized to provide the specific service.

The drawbacks of these solutions are quite evident, as they always require the user to go to an office, resulting in a waste of time and also higher costs for reaching the place where the service is provided.

Computer units for the provision of information and/or documents to citizens are also known, also commonly called "totems" in jargon, which find application in various sectors, both public and private, to provide the above counter services.

In particular, these units are designed to provide specific information to the user and possibly allow the printing of documents or sending information by the same user to a central manager.

These units or totems are often used within public offices, such as registry offices, schools and universities, and allow to receive specific or generic information and possibly to print official documentation.

It is clear that similar systems, essentially static in nature, are severely limited in functionality, not allowing the user to receive a personalized service that goes beyond the pre-set information inside the machine.

It follows that for the provision of specific and more complex services, such as for example a request for installments to a collection agency, carrying out checks, accepting payments and issuing receipts or other types of requests for a customizable service based on the user needs, it is always necessary to go to a physical counter manned locally by an operator.

However, for service providers, be they public bodies or private entities, it is not always possible to set up a counter service that operates continuously or in any case for the normal opening hours and days, i.e. eight hours a day, five days a week.

In particular, in towns with few inhabitants or for services with a relatively limited number of potential users, it may not be economically justified or in any case sustainable to set up a local counter that is always manned for the entire office hours. It follows that it is often necessary to merge multiple local counter services into a single centralized counter or to limit the operations of individual local counters, reducing the opening hours and/or number of days per week, in any case to the detriment of the user.

WO20137098790 describes a system for the remote management of service to users which comprises means of audiovisual communication between a local workstation designed to be used by a user and a video assistance unit belonging to an operator who is automatically selected at the time of the request of the service by the user, between a plurality of operators.

The local station also comprises means for the acquisition of the user's personal data by the selected operator and a scanning device to acquire an identification document of the user; there is also a control system designed to allow the user to use the service after activation carried out by the operator.

The system described in this document has a locally limited structure, i.e. the access stations for users are arranged within the same room, while the operator stations are also arranged in different places.

Therefore, this well-known management system does not represent a system for the management of counter services but is essentially a system that allows a user who goes to a business center where multiple service providers are provided to select the specific operator for the service.

From IT2018000058235, a system for the remote management of counter services is known, designed to manage the request for counter services from different users, even simultaneously and wherein the users are located in different places.

This solution also appears to be improvable, mainly in the possibilities of use by users and in making the provision of more efficient and fast services.

### Scope of the invention

The object of the present invention is to overcome the above-mentioned drawbacks, providing a counter system for the remote management of counter services which is characterized by high efficiency and relative cost-effectiveness.

A particular object is to provide a remote counter system with advanced features that allows the simultaneous management of a multiplicity of requests from different users in an efficient manner and without the need to resort to a correspondingly increased number of operators, so as to contain the overall management costs of the system. Yet another object is to provide a remote counter system with advanced features for the remote management of counter services which allows the user to remotely access any service, such as a consultancy service, provision or sending of documents or any other type of service commonly provided by a public or private entity, always allowing the communication with an operator in a substantially identical manner to what would happen at a local desk.

Yet another object is to provide a system for the remote management of counter services which allows a public body or private entity suitable to provide services to the citizen to always make the service available but limiting the costs relating to personnel and structures.

Yet another object is to provide a system for the remote management of counter services which allows a public body or private entity suitable to provide services to citizens to simultaneously manage multiple locations through a limited number of operators, reducing or eliminating at the same time the queues.

Last but not least, the object is to provide a system for the remote management of counter services which allows the provision of services in a safe manner for both the user and the provider.

These objects, as well as others that will become more apparent hereinafter, are achieved by a system for the remote management of counter services according to claim 1, which reference is made to for greater conciseness of the explanation.

Thanks to this combination of features, it will be possible to remotely manage a plurality of local counters with a reduced number of operators, avoiding the operators having to man a counter even in the absence of users, so as to manage downtime, optimize resources and at the same time guarantee the full and efficient operation of the counter.

In this way it will be possible to productively rationalize the resources necessary to provide the service, in particular the need and costs of personnel, but without reducing the quality of the service both in terms of waiting times and of the quality and feeling of attention received by the user as the video presence means of communication will simulate the presence of a local operator inside a counter separated by protective glass. Advantageous embodiments of the invention are obtained in accordance with the dependent claims.

### Brief disclosure of the drawings

Further features and advantages of the invention will become more apparent in light of the detailed description of a preferred but not exclusive embodiment of a system according to the invention, shown by way of non-limiting example with the aid of the attached drawing tables wherein:
**FIG. 1** is a schematic view of the system according to a preferred configuration;
**FIG. 2** is a view of a local counter belonging to the system according to a first configuration;
**FIG. 3** is a view of a local counter belonging to the system in a second configuration;
**FIG. 4** is a view of a group of local counters belonging to the system installed within the same environment.

### Best mode of carrying put the invention

With reference to the attached figures, a possible configuration, preferred but not exclusive, of a system according to the invention, globally referred as **1,** is schematically illustrated.

System **1** may be implemented within public offices or private entities to provide services which may refer, in a purely indicative and non-limiting manner, to the release of information, release of documents, acceptance of documents, carrying out of procedures of any kind, both administrative and fiscal, in a manner entirely similar to what can happen in any public or private office.

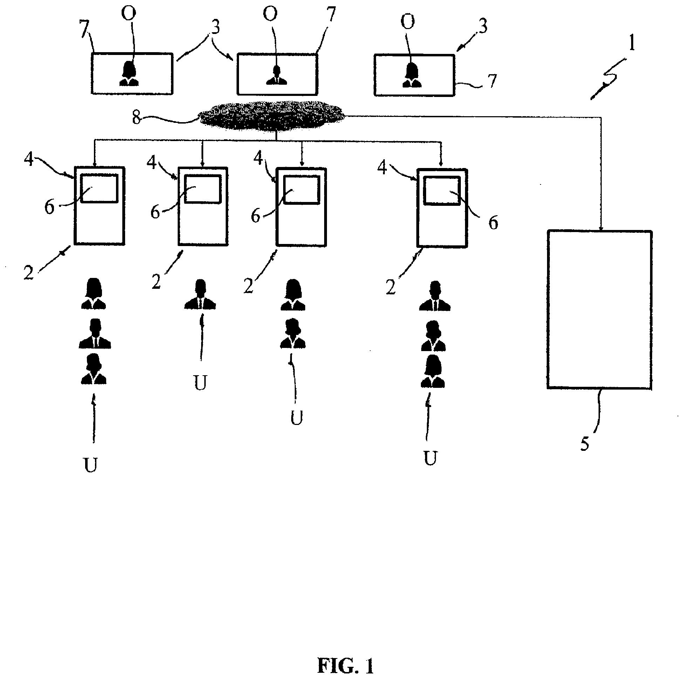

As visible from the schematized structure of **Fig. 1****,** the system **1** first of all comprises a plurality of local counters **2** accessible locally by a plurality of users **U** and suitable to be located in corresponding rooms, public and/or private areas accessible by the users **U** for which the service to be managed is intended.

The number of counters **2** may vary according to needs and in particular the geographical area to be covered, as well as the availability of rooms or areas wherein they can be placed, without particular theoretical limitations.

The system **1** also comprises one or more remote workstations **3,** each manned by an operator **O,** suitable to be placed in remote communication with the local counters **2** so that each remote workstation **3** may connect with only one counter **2** at a time. The workstations **3** may all be located in the same place, for example a central or peripheral headquarters of the body or entity providing the service, or arranged in different places as it will not be necessary to put them in direct communication with each other.

Each counter **2** is also associated with video presence communication means **4** designed to remotely put the workstations **3** in contact with the local counters **2.** There is also a central management unit **5** connected remotely to each counter **2,** to acquire therethrough a request for the provision of a service from single users **U.** Preferably, the connection between the central management unit **5** and the workstations **3** will be obtained via a cloud server **8.**

The central management unit **5** will be designed to receive the requests and sort them into one or more queues according to one or more predetermined parameters so as to temporarily associate each of the workstations **3** with a corresponding local counter **2** according to a predetermined serving order based on of these parameters.

For example, according to a simplified management method, a single association parameter represented by the time may be provided, so as to serve the user **U** who first made a request for service provision, regardless of the type of service requested or the place or type of counter **2** from which the request came.

However, according to further operating methods, the central management unit **5** may be designed to organize requests into multiple queues, differentiated for example on the basis of the time of the request but also the type of service requested or any priorities or other exceptions.

Furthermore, according to a first operating method, the remote workstations **3** may be associated indifferently with each of the counters **2** regardless of the type of service requested.

According to different operating modes, the operation of the individual remote workstations **3** may be differentiated based on the types of services that can be provided and/or the location of the individual local counter **2.**

Purely by way of example, one or more workstations **3** may be reserved for specific services or may be excluded from the provision of certain services, in particular services that require specific skills, which instead may only be entrusted to a limited number of workstations **3.**

Consequently, the central management unit **5** will be adapted to divide the requests into different queues also depending on the type of request and the availability of the various remote workstations **3.**

Regardless of the specific operation of the individual remote workstations **3,** the system **1** will have the advantage of aggregating the various local offices having the counters **2** into a single virtual central office, so as to maximize the productivity of the individual workstations **3** and significantly reduce the costs related to the workforce, with reductions of up to 60% or more compared to average costs.

In order to simulate as much as possible the local presence of the operator **O** associated with the remote workstation **3,** the video presence communication means **4** will comprise an HD monitor **6** associated with each of the local counters **2** and connected remotely to video acquisition means **7,** preferably in HD, associated with the remote workstations **3.**

Conveniently, each of the remote workstations **3** may be provided with at least two monitors, the first of which will be used by the operator **O** for the video presence call while a second monitor will be used by the same operator **O** to display his/her management software.

Furthermore, the HD **6** monitor will be sized to transmit the real-size image of the operator, in full or partial form, for example transmitting only the face or a half-length portrait. As an example, monitor **6** will be 50 inches.

Furthermore, the video presence communication means **4** of the local counters **2** will preferably be connected to the video acquisition means **7** via a fiber optic internet network or other high-speed data communication network, with connection reliability of 99%.

In this way, unlike a video conference, it will be possible to obtain a video presence experience that creates the illusion that the remote operators **O** are in the same place as the user **U** who went to counter **2,** creating direct visual contact which will also produce emotional involvement.

According to a particularly advantageous variant, the monitor **6,** or the monitors, may have a predominantly vertical development to give the counter a configuration that is more in line with reality, allowing the operator **O** to be viewed half-length, as happens in common physical counters.

According to a particularly advantageous innovative aspect, one or more of the operators **O** may be virtual operators managed by Al algorithms and Deep Learning neural networks.

In this way it will be possible to manage a greater number of requests without it being necessary to consequently increase the number of physical operators and without there being a reduction in the efficiency and productivity of the system.

To increase the effect of the real presence of the operator **O,** each counter **2** will comprise a support structure, for example made of wood, equipped with the monitor **6.**

In a first configuration, the monitor **6** may be placed at a height such as to allow the user U to have the face of the operator **O** at face height; for example, the support structure may have a support surface for the monitor **6** located approximately 120cm from the ground, even if this height is purely illustrative and not restrictive of the invention.

In a second configuration, the station may be configured as a consultancy station in which user **U** remains seated and therefore monitor **6** will be placed lower.

In the event that operator **O** is virtual and managed by Al, it will be possible or not to associate a computerized image of an operator therewith to make the experience as similar as possible to a common traditional counter activity.

In light of the current state of Ai, for which informational hallucinations or topics that AI is not able to handle could occur, it will be possible to foresee the possibility of informing the user of the transition to a real operator **O** who can complete the session as requested by user **U,** providing the missing information and then subsequently inserting the exception that generated the hallucination into the back office.

In this way there is no longer any limit to the number of simultaneous sessions with respect to the available OR operators.

Regardless of the configuration of the support structure, each local counter **2** will also be equipped with means for the optical acquisition of documents.

For example, the means for the optical acquisition of documents may comprise an optical scanner for the acquisition of any type of document, such as an identity document or any other document functional to the completion of the procedure and the provision of the service, for example provided with a barcode or other alphanumeric or graphic code, such as a QR code or similar, for automatic recognition of the document.

Alternatively, or in addition, the means for the optical acquisition of documents may comprise a front video camera, preferably with high resolution, which can simultaneously acquire the image of the user's identity document and an image of the user's face so as to allow the operator **O** in the remote workstation **3** to verify the identity of the user **U,** also allowing the acquisition of one or more photographs of the user **U,** so as to generate a file which will be transmitted to the central management unit **5** which will store it within a proper memory.

Means for the digital acquisition of data may also be provided, such as devices for signing any documentation in a digital format with substitute conservation by using remote digital signature with OTC, devices for video recording of consultancy sessions and everything needed to keep the counter session open.

Operators **O** may also be provided with physical and/or digital tools for affixing stamps and/or signatures and/or other identification marks on the documents produced.

Local counters **2** may also be provided with means for biometric recognition of users. Furthermore, the local counters **2** may possibly be implemented with additional devices, such as printers, POS devices for making payments via ATM or credit cards, ATM terminals for dispensing money or making payments and top-ups, without particular limitations.

Furthermore, the local counters **2** may have a proper system for integration with locker cabinets, i.e. unattended structures with multiple compartments accessible via closing doors with electronic locks that can be opened by entering a unique, non-repeatable enabling code.

The connection between the local counter **2** and the locker cabinet may be either direct or indirect, for example via the central management unit **5.**

Furthermore, the locker cabinets may be located either in the same location as the local counter **2** which it is associated with or be located away from it.

The power supply of each local counter **2** may be provided by connection to the electricity grid and/or by means of autonomous power systems, with possible buffer batteries and the presence of UPS systems.

Last but not least, each local counter **2** may be provided with a GSMJ4G backup data system.

For the automatic management of queues and to increase the safety of operations, and in particular to allow the remote operator **O** to check the identity of the user **U,** each local counter **2** may be provided with a unique identification code placed directly on the supporting structure.

For example, the code will consist of a QR code comprising the name of the office or place where the local counter **2** is located and the type of service that can be provided by the local counter **2.**

In this way, the user **U** will only have to scan the QR code with his mobile phone to instantly receive a message, for example an SMS, from the central unit **5** for remote queue management, which will inform him/her of his/her position in the general queue between all the counters **2,** possibly also indicating an estimate of the waiting time. In the user **U** has no smartphone or other mobile communication device enabled for automatic code reading, they will be asked to send a text message containing a different alphanumeric identification code of the counter, having the same value as the QR code, always shown on the structure of the counter **2,** to a telephone number indicated on counter **2.**

The central remote queue management unit **5** will also indicate the possible operation of the workstations **3** in other locations so that the user **U** is aware that the system **1** is in operation even if he does not see other users in the same place as him/her.

At the time of his/her turn, user **U** will receive a message, for example an SMS, Whatsapp message or other notification, also via a specific APP, which will invite him to approach the counter **2** and enter an identification code just received via message. The recognition code will be the key to activate the counter **2** and start the communication with the remote operator **O** assigned by the central management unit **5** on the basis of the queue.

Conveniently, the central remote queue management unit **5** will constantly report to each remote workstation **3** the situation in the various counters **2,** i.e. the number of users **U** waiting for each counter **2.**

At this point the session at the counter can begin by activating the video presence session.

The operator **O** will first ask user **U** to show an identification document, taking two photos of the user's face alongside the identification document via the front camera. The appropriately approved file will be stored in the archive, linked to the coded session for two or three years.

The system may provide a second safety recognition level which may comprise the forwarding of an OTP code to mobile phone of the user **U,** inviting him/her to type it on the local counter **2.**

Once the remote recognition formalities have been completed, it is possible to move on to the actual counter session.

The individual local counter **2** may further be implemented with further functions, both physical and via software, which will make the use of the service easier and more efficient.

For example, some local counters **2,** if not all, may be adapted to allow comfortable and independent use even by users with motor impairments, possibly in wheelchairs. For example, these local counters **2** may have a system for reading specific service cards reserved for people with motor impairments or other disabilities.

Furthermore, these local counters **2** may have a vertical positioning of the screen for interaction with people in wheelchairs and/or monitors **6** with a screen having adapted resolution for visually impaired people.

Furthermore, a communication system may be provided through translation into sign language, for example managed by Al.

As general services, it will be possible to integrate the system with multilingual translation services.

Last but not least, in order to guarantee the highest safety standards and guarantee compliance with the requirements established by the regulations regarding the management of privacy and personal data, the system may also be implemented with audit trail systems aimed at tracking all transactions.

From an operational point of view, the system **1** is therefore made up of a series of physical counter located in an area, i.e. the local counters **2,** of a cloud server **8** which manages all the connections and a web page on the operator **O** side for a safe control of all functions from the operator's desk.

Operator **O** will have a PC with double monitor to view his CRM on one, i.e. the program needed to carry out his/her function as a public operator, while on the other he/she will view the menus and the image of user **U** present at the counter **2** as if he/she was looking through the glass of a traditional counter.

The exchange of documents between operator **O** and user **U** will take place in a fluid and natural manner through the document acquisition means, such as the above optical acquisition means, which will preferably be placed below the monitor **6** to acquire high resolution documents to be transmitted to the operator **O** and, in the opposite direction, to transmit to user **U** the files printed by operator **O**.

An optical scanner that reads QR Codes, barcodes and data matrix will also acquire the data on the documents supplied by the user **U,** to reduce the operator's response times.

According to a particularly advanced configuration, the system **1** will be adapted to use 50-inch or, in a more compact version, 43-inch touch screens, either horizontal or vertical, such as the user **U** may have the sensation of speaking actually with an operator **O** beyond full-size glass.

Advantageously, the means for acquiring and dispensing documents will not be exposed to the view of the user **U,** so as not to create any type of embarrassment for a public not accustomed to technology or in any case not very technological.

For example, it will be possible to provide only a slot **14,** visible more clearly in **Fig**. **2****,** located under the monitor **6** through which to receive or insert documents and possibly interact with payment systems such as POS.

The proposed system essentially works in synchronous mode, i.e. with operator **O** working in a live, called to the session by user **U** who chooses the service and the time window.

At the same time, system **1** may also be set up for less intensive use, for example at night, in self-service mode, reducing the number of services but still offering responses to users in terms of certification and basic assistance.

The system **1** is designed to serve various local counter **2** located throughout the area, even from multiple locations of the company or organization providing the service, optimizing the staff in the less busy locations and effectively leveling the tasks between all the operators **O,** so as to have, regardless of the place of work, a sort of leveling of workloads that is impossible with traditional systems and which allows the quality of the service provided to be improved.

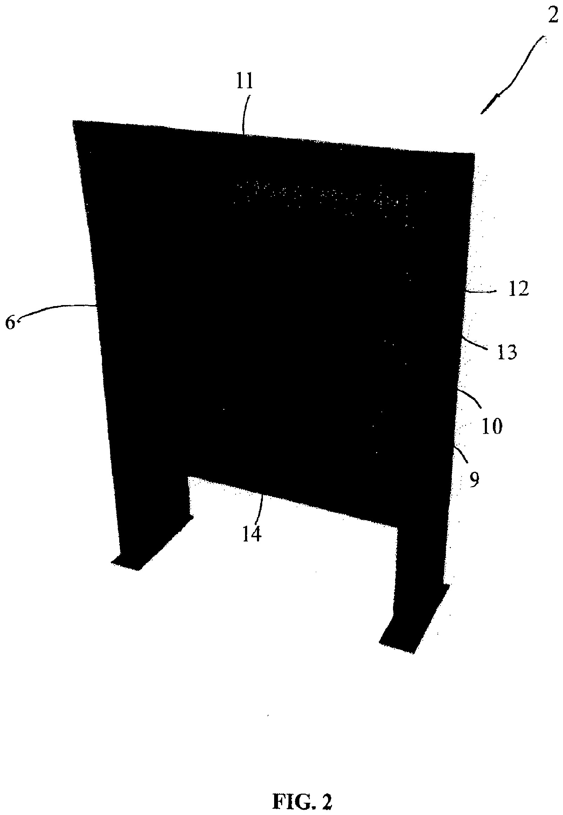

**Fig. 2** shows more clearly a possible configuration of a local counter **2** which will be an object made of monobloc steel which comprises, in addition to the touch monitor **6** and the means for acquiring and printing documents, preferably in A4 format, also a POS **9** with relative printer **10,** cameras for video calls in presence **11,** environmental control camera **12** and possibly further auxiliary devices such as, for example, fingerprint for reading fingerprints, QR Code barcode reader, datamatrix.

Conveniently, the product will be a monobloc and may be installed in an unitary manner to be connected solely to the electric grid and to the data network, with internal backups for both the power supply and the 4G data connection.

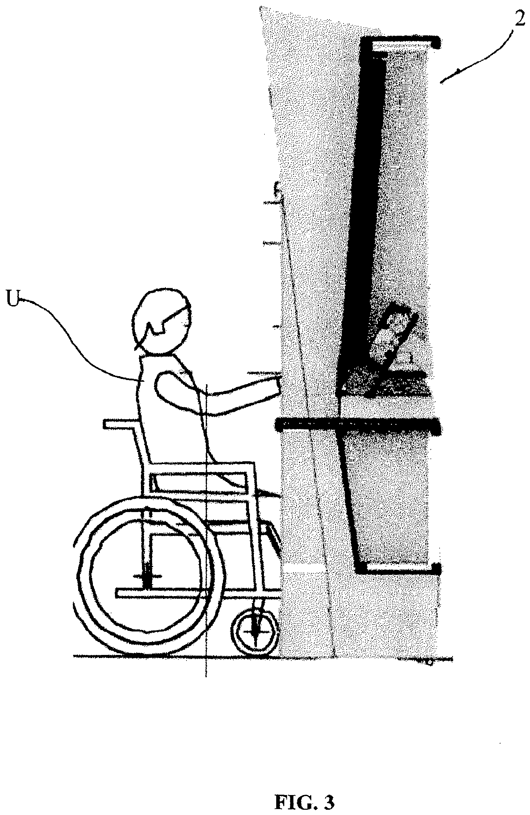

**Fig. 3** shows a second configuration of the local counter **2** with a 43-inch touch monitor **6** placed vertically to also be suitable for users in wheelchairs, to facilitate operations actions that would otherwise be impossible with a face-to-face video call camera located at the top of the screen.

At the request of the user **U,** or by reading a special card containing the disability data, it will be possible to activate a second camera placed at the bottom of the monitor in order to frame the person in the wheelchair and slide the monitor images downwards, to adapt to the view of the subject sitting in the wheelchair.

If the user **U** has view impairments, again upon request or by reading a specific card, it will also be possible to set the 43-inch vertical screen in the high resolution configuration for the visually impaired.

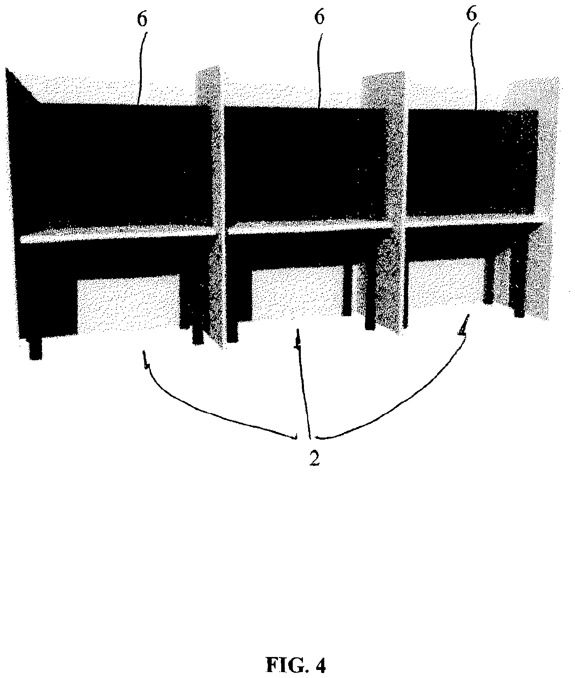

Furthermore, in the event that the disability is of the auditory type, there is a connection to an operator **O** who uses sign language, while automatic subtitles will appear in the lower part of the screen which will reproduce the speech made by the operator **O.** Each location may have one or more local counters **2,** depending on the needs, or series with three or more local counters **2,** as exemplified in **Fig. 4****.**

A further accessory present on the local counter 2 could be an emergency button **13** to be activated at any time, both for reasons dependent on the counter and for external causes that occurred inside the room in which the counter **2** is located and which will allow the activation of an emergency call.

Alternatively, the emergency button **13** may be replaced with a single call IP intercom, so that the intervention of a technician or expert can be requested.

The whole system works with booking of time windows by type of service, by location or, if desired, also by operator.

Access to the reservation may take place in various ways, such as by way of example and without limitation:
framing a QR Code with the requested service;
sending a text message with a specific word;
by accessing a website where the services to be provided and the days of free time windows are displayed;
by querying a dynamic IVR web page via telephone and then requesting confirmation via SMS.

In any case, the system **1** will query availability and return the appointment with queue skip code and access code.

## Claims

1. A remote counter system, comprising:
- one or more local counter **(2)** accessible locally by a plurality of users **(U);**
- one or more remote workstations **(3)** suitable to be placed in remote communication with one at a time of said local counters **(2);**
- video presence communication means **(4)** associated with each of said local counters **(2)** and suitable to remotely put said workstations **(3)** in contact with said local counters **(2);**
- a central management unit **(5)** connected remotely to each of said local counters **(2)** and suitable to receive requests from users **(U)** via said local counters **(2)** for providing a service and temporarily associating said remote workstations **(3)** with said local counters **(2)** according to a predetermined supply order based on one or more parameters;
wherein said video presence communication means **(4)** comprises for each of said local counters **(2)** at least one monitor **(6)** adapted to reproduce the image of the operator **(O)** designed to manage the remote workstation **(3)** from time to time associated with the correspondent of said local counters **(2);**
wherein one or more of said remote workstations **(3)** are managed by AI algorithms trained by Deep Learning neural networks and suitable to simulate the operators **(O)** of the corresponding remote workstations **(3).**

2. System as claimed in claim 1, wherein said central management unit **(5)** is suitable to manage said local counters **(2)** according to a predetermined supply order on the basis of one or more parameters and to receive said requests for providing a service and sort them into one or more queues according to one or more predetermined parameters.

3. System as claimed in claim 2, wherein said central management unit **(5)** is provided with communication means suitable for communicating with mobile communication devices to send information relating to the number of users **(U)** in the queue and the enabling said local counters **(2)** to communication with one of said remote workstations **(3).**

4. System as claimed in any preceding claim, wherein said local counters **(2)** are located in places different from each other.

5. System as claimed in any preceding claim, wherein said video presence communication means **(4)** comprise an HD monitor **(6)** associated with each of said local counters **(2)** and connected remotely to video acquisition means **(7)** associated with said remote workstations **(3),** said HD monitor **(6)** being sized to transmit the real-size image of the operator (**O**) present in the remote workstation **(3)** connected from time to time.

6. System as claimed in claim 5, wherein said video presence communication means **(4)** of said local counters **(2)** are connected to said video acquisition means **(7)** via a fiber optic internet network or other high-speed data communication network.

7. System as claimed in any preceding claim, wherein each of said local counters **(2)** comprises a supporting structure provided with said monitor **(6)** and means for the optical acquisition of documents and/or for the digital acquisition of data.

8. System as claimed in claim 7, wherein each of said local counters **(2)** is provided with a unique identification code placed on said supporting structure.

9. System as claimed in any preceding claim, wherein each of said local counters **(2)** is provided with means for biometric recognition of users.

10. System as claimed in any preceding claim, wherein each of said local counters **(2)** is provided with means for acquiring images and/or videos.
